# EUROPEAN PATENT APPLICATION

(11) **EP 4 631 998 A1**
(43) Date of publication of application: **15.10.2025**
(21) Application number: 24168972.8
(22) Date of filing: 08.04.2024
(51) Int. Cl.: C08K 3/26, C09J 163/00

(54) **USE OF EGGSHELL OR SEASHELL PARTICLES TO IMPROVE PROPERTIES OF HEAT-CURING EPOXY RESIN COMPOSITIONS**

(71) Applicant: Sika Technology AG, 6340 Baar (CH)
(72) Inventor: GUTGSELL, Michael, 8610 Uster (CH); LEMPEREUR, Juliette, 8953 Dietikon (CH); SIMON, Ilona, 5400 Baden (CH); REINGARDT, Bernhard, 8800 Thalwil (CH)
(74) Representative: Sika Patent Attorneys

(57) **Abstract**

The invention relates to the use of particles selected from the group consisting of eggshell particles and seashell particles to improve the properties of thermosetting one-component epoxy resin compositions.

The thermosetting one-component epoxy resin compositions provide sufficient mechanical properties as well as high impact peel values, fulfill the special performance criteria of CKD systems for lap shear strength performance concerning humidity resistance and provide good storage stability, especially at elevated temperatures.

## Description

### Technical field

The invention relates to the field of thermosetting one-component epoxy resin compositions, especially for use as bodywork adhesive.

### Prior art

Thermosetting, one-component epoxy resin adhesives have already been used for some considerable time as adhesives in body construction. One important field of use of one-component thermosetting epoxy resin adhesives, accordingly, is in vehicle construction, where typically there are metal substrates such as steel sheets and aluminium present, particularly in the context of adhesive bonding. Following the application of the epoxy resin composition, the bodywork is heated in the CEC (cathodic electrocoating) oven, by means of which the thermosetting epoxy resin composition as well is cured. Good mechanical properties, especially tensile strength, elongation and E-modulus, as well as high impact peel values are required in the context of adhesive bonding.

A common practice in the automotive industry is to manufacture parts in one country or region, then export and/or ship to another location (e.g., country or region) for final assembly. This is called CKD (complete knock-down). In a CKD system, parts may be partially assembled prior to shipping to the location of final assembly. In particular, in a first location (e.g., an auto parts factory), components may be bonded together using an epoxy adhesive, which is then preferably partially cured, e.g., with elevated temperature. The partially assembled components are then shipped to a second location, e.g., the location of final assembly. Typically, additional assembly takes place at the second location, and then the curing process (begun in the first location), is completed.

A common problem is that if a part used in the automotive body is adhesively bonded at the first location, the adhesive needs to fulfil special performance criteria concerning the humidity resistance such that the article assembled at the second location meets product and manufacturing specifications, especially with respect to lap shear strength performance. Especially if such uncured or partially cured articles are stored or transported at elevated temperature and humidity, e.g. 40 °C with 80 % relative humidity, the lap shear strength of the finally cured article is significantly reduced compared to an article immediately cured after assembly.

WO 2012158336 A1 describes thermosetting, one-component epoxy resin adhesives with an excess of dicyandiamide hardener compared to epoxy functional groups for improved lap shear strength after CKD aging. WO 2010098950A1 describes thermosetting, one-component epoxy resin adhesives containing an epoxy-functional fatty acid oligomer and a semi-crystalline or crystalline polyester polyol for increased storage stability. EP 0454471 A2 describes adhesive compositions containing at least one biological calcium compound selected from hydroxyapatite, seashells, and eggshells as an adhesion improver.

Not only the above-mentioned parts of CKD systems but also adhesive containers are exposed to higher temperatures during transport to and/or storage in car manufacturing factories. Such conditions can lead to an increase in viscosity of the adhesive compositions because all of the reactive components are present in the one-part epoxy formulation that lead to a prematurely curing. These adhesives are commonly manufactured and packaged weeks or months before they will be used, and they must remain in an uncured state throughout that period of time. Premature curing causes the product viscosity to increase, which can make it difficult to apply to a substrate. In extreme cases, the product becomes completely unusable.

### Summary of the invention

It is therefore an object of the present invention to provide thermosetting one-component epoxy resin compositions that have sufficient mechanical properties as well as high impact peel values, fulfill the special performance criteria of CKD systems for lap shear strength performance concerning humidity resistance and provide good storage stability, especially at elevated temperatures.

This object was surprisingly achieved by the use of particles **PA** selected from the group consisting of eggshell particles **PAE** and seashell particles **PAS** in a thermosetting one-component epoxy resin composition as claimed in claim 1 to 3 to improve the lap shear strength after exposure in the uncured state for 30 days at 35 °C, 80 % humidity, the impact peel strength or the viscosity increase after storage for 7 days at 60 °C. This epoxy resin composition has particularly good usability as a one-component thermosetting adhesive, especially as a thermosetting one-component bodywork adhesive in motor vehicle construction.

### Ways of executing the invention

In a first aspect of the invention, the invention is related to the use of particles **PA** selected from the group consisting of eggshell particles **PAE** and seashell particles **PAS,** to improve the lap shear strength of a thermosetting one-component epoxy resin composition after exposure in the uncured state for 30 days at 35 °C, 80 % humidity.

The lap shear strength is measured as described in the experimental section, wherein the improvement of the lap shear strength is compared to said thermosetting one-component epoxy resin compositions not having said particles **PA.**

Thermosetting one-component epoxy resin composition comprises:
a) at least one epoxy resin **A** having an average of more than one epoxy group per molecule, preferably 10 - 60 % by weight, more preferably 30 - 60 % by weight, most preferably 40 - 45 % by weight % by weight, based on the total weight of the thermosetting one-component epoxy resin composition;
b) at least one latent curing agent **B** for epoxy resins, preferably the latent curing agent **B** is selected from dicyandiamide, dihydrazides, guanamines, guanidines, anhydrides of polybasic carboxylic acids and aminoguanidines, preference being given to dicyandiamide; and
c) at least one toughness improver **D**, preferably at least one terminally blocked polyurethane polymer **D1.**

Preferably, the improvement of lap shear strength is more than 10 %, more preferably more than 20 %, comparted to the thermosetting one-component epoxy resin compositions not containing particles **PA.**

Preferably, the thermosetting one-component epoxy resin composition has a lap shear strength after exposure in the uncured state for 30 days at 35 °C, 80 % humidity, measured as described in the experimental section, of > 17.5 MPa, especially ≥ 18 MPa, especially ≥ 19 MPa.

In a second aspect of the invention, the invention is related to the use of particles **PA** selected from the group consisting of eggshell particles **PAE** and seashell particles **PAS,** to improve the impact peel strength, preferably at 23 °C and/or at - 30 °C, more preferably at -30 °C, of a thermosetting one-component epoxy resin composition.

The impact peel strength is measured as described in the experimental section, wherein the improvement of the impact peel strength is compared to said thermosetting one-component epoxy resin compositions not having said particles **PA.**

The thermosetting one-component epoxy resin composition comprises:
a) at least one epoxy resin **A** having an average of more than one epoxy group per molecule, preferably 10 - 60 % by weight, more preferably 30 - 60 % by weight, most preferably 40 - 45 % by weight % by weight, based on the total weight of the thermosetting one-component epoxy resin composition;
b) at least one latent curing agent **B** for epoxy resins, preferably the latent curing agent **B** is selected from dicyandiamide, dihydrazides, guanamines, guanidines, anhydrides of polybasic carboxylic acids and aminoguanidines, preference being given to dicyandiamide; and
c) at least one toughness improver **D**, preferably at least one terminally blocked polyurethane polymer **D1**;

Preferably, the improvement of impact peel strength is more than 10 %, more preferably more than 15 %, even more preferably more than 40 %, most preferably more than 60 %, compared to the thermosetting one-component epoxy resin compositions not containing particles **PA.**

Preferably, the thermosetting one-component epoxy resin composition has an impact peel strength at 23 °C, measured as described in the experimental section, of ≥ 25 N/mm, especially ≥ 27 N/mm, more preferably ≥ 28 N/mm.

Preferably, the thermosetting one-component epoxy resin composition has an impact peel strength at -30 °C, measured as described in the experimental section, of ≥ 10 N/mm, especially ≥ 13 N/mm, more preferably ≥ 15 N/mm.

In a third aspect of the invention, the invention is related to the use of particles **PA** selected from the group consisting of eggshell particles **PAE** and seashell particles **PAS,** to reduce the viscosity increase after storage for 7 days at 60 °C of a thermosetting one-component epoxy resin composition.

The viscosity increase is measured as described in the experimental section, wherein the reduction of the viscosity increase is compared to said thermosetting one-component epoxy resin compositions not having said particles **PA.**

The thermosetting one-component epoxy resin composition comprises:
a) at least one epoxy resin **A** having an average of more than one epoxy group per molecule, preferably 10 - 60 % by weight, more preferably 30 - 60 % by weight, most preferably 40 - 45 % by weight % by weight, based on the total weight of the thermosetting one-component epoxy resin composition;
b) at least one latent curing agent **B** for epoxy resins, preferably the latent curing agent **B** is selected from dicyandiamide, dihydrazides, guanamines, guanidines, anhydrides of polybasic carboxylic acids and aminoguanidines, preference being given to dicyandiamide; and
c) at least one toughness improver **D**, preferably at least one terminally blocked polyurethane polymer **D1.**

Preferably, the reduction in viscosity increase is less than 90 % of the viscosity increase, more preferably less than 80 % of the viscosity increase of the thermosetting one-component epoxy resin compositions not containing particles **PA.**

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The particles **PA** selected from the group consisting of eggshell particles **PAE** and seashell particles **PAS.**

It was surprisingly found that the use of particles **PA** in thermosetting one-component epoxy resin compositions is advantageous with respect to:
- higher values of lap shear strength after exposure of the epoxy resin composition in the uncured state for 30 days at 35 °C, 80 % humidity;
- higher values of impact peel strength, preferably at 23 °C and/or at -30 °C; and / or
- reduction of the viscosity increase after storage for 7 days at 60 °C of a thermosetting one-component epoxy resin composition.

This can be seen, for example, in table 1 in the comparison of E1, E2 and E3 with Ref.1.

Preferred seashell particles **PAS** are selected from the group consisting of scallop, clam, short-necked clam, freshwater clam, mussel and oyster, preferably oyster. Most preferably, the particles **PA** are eggshell particles **PAE.**

The particles **PA** being eggshell particles **PAE** is advantageous with respect to higher values of elasticity, lap shear strength after exposure in the uncured state for 30 days at 35 °C, 80 % humidity and impact peel strength. This can be seen, for example, in table 1 in the comparison of E1 with E2 and E3.

Commercially available eggshell particles **PAE** are for example commercially available from YASPIS (Switzerland) and commercially available seashell particles **PAS** are for example commercially available from Insectosphere (France) or Ovive SE (France).

Preferably, the particles **PA** have a particle size D₅₀ between 5 - 200 µm, preferably between 7.5 - 150 µm, more preferably between 10 - 100 µm, determined by laser diffractometry, more preferably by using a Sympatec HELOS BR machine and wet dispersion analysis in isopropanol (QUIXEL).

Said particle size is advantageous with respect to higher values of elasticity and impact peel strength at - 30 °C. This can be seen, for example, in table 1 in the comparison of E2 with E3.

The proportion of the particles **PA** in the before mentioned uses is preferably 5-40% by weight, more preferably 10-30% by weight, most preferably 15-25% by weight, based on the total weight of the thermosetting one-component epoxy resin composition.

The epoxy resin **A** having an average of more than one epoxy group per molecule is preferably a liquid epoxy resin or a solid epoxy resin. The term "solid epoxy resin" is very well known to a person skilled in the art of epoxies and is used in contrast to "liquid epoxy resins". The glass transition temperature of solid resins is above room temperature, meaning that they can be comminuted at room temperature to give free-flowing powders.

Preferred epoxy resins have the formula (II)

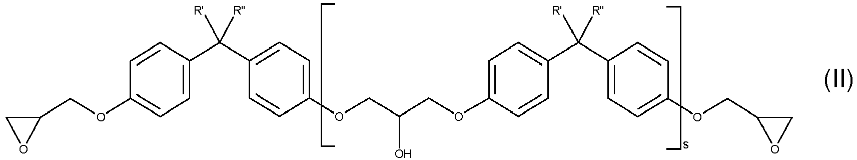

The substituents R' and R" here are independently either H or CH₃.

In solid epoxy resins, the index s has a value of > 1.5, especially of 2 to 12.

Such solid epoxy resins are commercially available, for example from Olin or Huntsman or Westlake.

Compounds of the formula (II) having an index s of 1 to 1.5 are referred to as semisolid epoxy resins by the person skilled in the art. For this present invention, they are likewise considered to be solid resins. However, preferred solid epoxy resins are epoxy resins in the narrower sense, i.e. where the index s has a value of > 1.5.

In liquid epoxy resins, the index s has a value of less than 1. Preferably, s has a value of less than 0.2.

Preference is thus given to diglycidyl ethers of bisphenol A (DGEBA), of bisphenol F, and of bisphenol A/F. Such liquid resins are available, for example, as Araldite^{®} GY 250, Araldite^{®} PY 304, Araldite^{®} GY 282 (Huntsman) or D.E.R.^{™} 331 or D.E.R.^{™} 330 (Olin) or Epikote 828 (Westlake).

Further suitable epoxy resins **A** are what are called epoxy novolaks. More particularly, these are phenol or cresol epoxy novolaks.

Such epoxy resins are commercially available under the EPN or ECN and Tactix^{®} trade names from Huntsman or from the D.E.N.^{™} product series from Olin.

The epoxy resin **A** is preferably an epoxy resin of the formula (II), especially a liquid epoxy resin of the formula (II).

In a particularly preferred embodiment, the thermosetting one-component epoxy resin composition contains both at least one liquid epoxy resin of the formula (II) with s < 1, especially less than 0.2, and at least one solid epoxy resin of the formula (II) with s > 1.5, especially from 2 to 12.

The proportion of the epoxy resin **A** is preferably 10-60% by weight, more preferably 30-60% by weight, most preferably 40-55% by weight, based on the total weight of the thermosetting one-component epoxy resin composition.

It is further advantageous when 50-100% by weight, especially 75-100% by weight, more preferably 75-95% by weight of the epoxy resin **A** is an aforementioned liquid epoxy resin.

It is further advantageous when 0-30% by weight, especially 0-25% by weight, more preferably 5-25% by weight, of the epoxy resin **A** is an aforementioned solid epoxy resin.

The composition of the invention also contains b) at least one latent curing agent **B** for epoxy resins. Latent curing agents are substantially inert at room temperature and are activated by elevated temperature, typically at temperatures of 70°C or more, thereby initiating the curing reaction. The customary latent curing agents for epoxy resins can be used. Preference is given to a latent curing agents **B** containing nitrogen.

Preferably, the latent curing agent **B** is selected from dicyandiamide, dihydrazides, guanamines, guanidines, anhydrides of polybasic carboxylic acids and aminoguanidines.

More preferably, the latent curing agent **B** is selected from dicyandiamide and dihydrazides, especially dicyandiamide.

The amount of the latent curing agent **B** for epoxy resins is preferably 0.5 to 15 wt%, more preferably 1 to 12.5 wt%, more particularly 2-6 wt%, based on the total weight of the thermosetting one-component epoxy resin composition.

Preferably, the thermosetting epoxy resin composition additionally contains at least one accelerator **C** for epoxy resins. Preferably, the accelerator **C** for epoxy resins is selected from the list consisting of substituted ureas, imidazoles, imidazolines and blocked amines, preferably substituted ureas, more preferably aliphatic substituted ureas.

Preferably, the fraction of the accelerator **C** for epoxy resins is from 0.01 - 2 wt.-%, preferably 0.1 - 1 wt.-%, more preferably 0.15 - 0.5 wt.-%, based on the total weight of the thermosetting epoxy resin composition.

The one-component thermosetting epoxy resin composition preferably comprises at least one toughness improver **D.** The toughness improvers **D** may be solid or liquid.

More particularly, the toughness improver **D** is selected from the group consisting of terminally blocked polyurethane polymers **D1,** liquid rubbers **D2** and core-shell polymers **D3.** The toughness improver **D** is preferably selected from the group consisting of terminally blocked polyurethane polymers **D1** and liquid rubbers **D2.** Particular preference is given to a terminally blocked polyurethane polymer **D1.**

If the toughness improver **D** is a terminally blocked polyurethane prepolymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP}**.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α□ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36.. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D,** in a third embodiment, may be a core-shell polymer **D3.** Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351 ^{™} from Zeon.

Preferably, the proportion of toughness improver **D,** especially of terminally blocked polyurethane polymer **D1,** is 10-45% by weight, especially 15-35% by weight, based on the total weight of the thermosetting one-component epoxy resin composition.

This is advantageous in that this gives high values for impact peel with simultaneously high values of lap shear strength.

In a further preferred embodiment, the composition additionally comprises at least one filler **F.** Preference is given here to mica, talc, kaolin, wollastonite, feldspar, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide and fumed silicas.

Advantageously, the total proportion of the overall filler **F** is 5-30% by weight, preferably 7.5-20% by weight, more preferably 10-15% by weight, based on the total weight of the thermosetting one-component epoxy resin composition.

In a further preferred embodiment, the composition additionally comprises at least one epoxy-bearing reactive diluent **G.** Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of difunctional, saturated or unsaturated, branched or unbranched, cyclic or open-chain, C₂-C₃₀ alcohols, e.g. ethylene glycol glycidyl ether, butanediol glycidyl ether, hexanediol glycidyl ether, octanediol glycidyl ether, cyclohexanedimethanol diglycidyl ether, neopentyl glycol diglycidyl ether, and the like;
- glycidyl ethers of tri- or polyfunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Advantageously, the total proportion of the epoxy-bearing reactive diluent G is 0.1-15% by weight, preferably 0.1-5% by weight, especially preferably 0.1-2.5% by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

A particularly preferred one-component epoxy resin composition comprises:
- 10-60% by weight, more preferably 30-60% by weight, most preferably 40-55% by weight, based on the total weight of the thermosetting one-component epoxy resin composition, of at least one epoxy resin **A** having an average of more than one epoxy group per molecule;
- at least one latent curing agent **B** for epoxy resins, where the latent curing agent **B** is selected from dicyandiamide, dihydrazides, guanamines, guanidines, anhydrides of polybasic carboxylic acids and aminoguanidines, preference being given to dicyandiamide, preferably in an amount of 0.5 to 15 wt.-%, more preferably 1 to 12.5 wt.-%, more particularly 2-6 wt.-%, based on the total weight of the thermosetting one-component epoxy resin composition;

- preferably at least one accelerator **C** selected from the list consisting of substituted ureas, imidazoles, imidazolines and blocked amines, especially substituted ureas, preferably, the fraction of the accelerator **C** is from 0.01 - 2 wt.-%, preferably 0.1 - 1 wt.-%, more preferably 0.15 - 0.5 wt.-%, based on the total weight of the thermosetting one-component epoxy resin composition;
- at least one toughness improver **D**, preferably at least one terminally blocked polyurethane polymer **D1,** preferably in an amount of 10-45% by weight, especially 15-35% by weight, based on the total weight of the thermosetting one-component epoxy resin composition;
- preferably 5-30% by weight, preferably 7.5-20% by weight, more preferably 10-15% by weight, based on the total weight of the thermosetting one-component epoxy resin composition, of at least one filler **F,** preferably selected from the group consisting of calcium carbonate, calcium oxide and fumed silicas;
- preferably 0.1-15% by weight, preferably 0.1-5% by weight, especially preferably 0.1-2.5% by weight, based on the total weight of the thermosetting one-component epoxy resin composition, of an epoxy-bearing reactive diluent **G.**

It is advantageous if the proportion of the used particles **PA** in the particularly preferred one-component epoxy resin composition is 5-40% by weight, more preferably 10-30% by weight, most preferably 15-25% by weight, based on the total weight of the thermosetting one-component epoxy resin composition.

It may further be advantageous when the particularly preferred one-component epoxy resin composition consists of the aforementioned constituents to an extent of more than 80% by weight, preferably more than 90% by weight, especially more than 95% by weight, based on the total weight of the epoxy resin composition.

It is advantageous when the epoxy resin composition of the invention has a viscosity at 25°C of 1000-5500 Pa*s, especially 1500-5000 Pa*s, preferably 2000-4500 Pa*s, more preferably 2000-4000 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinccoated steel, and post-phosphated steel, and also aluminum, especially in the variants which typically occur in automobile construction.

Such a process for the bonding of heat-stable substrates preferably comprises the stages:
i) applying a thermosetting one-component epoxy resin composition as described in detail above to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C.

The substrate **S2** consists here of the same material as or a different material from the substrate **S1.** The substrates **S1** and/or **S2** are in particular the aforementioned metals and plastics.

Preferably, in step iii), the composition is heated to a temperature of 100-220°C, especially of 120-200°C, preferably between 130 and 150°C, more preferably between 130 and 140°C, and the composition is left at the aforementioned temperature for 10 min-6 h, 10 min-2 h, 10 min-60 min, 10 min-30 min, 10 min - 20 min, more preferably 10 min - 15 min.

Such a method of bonding heat-stable materials results in an adhesive-bonded article. Such an article is preferably a vehicle or part of a vehicle. Hence such an adhesive-bonded article can be obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of the above-described composition are preferably used at temperatures between typically 120°C and -40°C, preferably between 100°C and -40°C, in particular between 80°C and -40°C.

A particularly preferred use of the thermosetting one-component epoxy resin composition is the use thereof as a thermosetting one-component bodywork adhesive in motor vehicle construction or as a stiffening compound or as a foamable, thermosetting composition for the reinforcement of voids in structural components and reinforcing elements.

Preferably, the thermosetting one-component epoxy resin composition have the following properties:
Tensile strength (TS), measured as described in the experimental section, of ≥ 20 MPa, especially ≥ 25 MPa, especially ≥ 30 MPa;
Elongation at break (EB), measured as described in the experimental section, 3-20%;
Modulus of elasticity (E-modulus), measured as described in the experimental section, of ≥ 1000 MPa, especially ≥ 1500 MPa, more preferably ≥ 2000 MPa, most preferably ≥ 2200 MPa;
Lap shear strength (LSS), measured as described in the experimental section at a room temperature of > 25 MPa, especially ≥ 27.5 MPa, more preferably ≥ 30 MPa.

### Examples

Some examples which further illustrate the invention, but which are not intended to restrict the scope of the invention in any way, are cited below.

### Preparation of a toughness improver ("D1")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D1.***

| | |
|---|---|
| A1 | Liquid aromatic epoxy resin, D.E.R. 331 (bisphenol A diglycidyl ether), Olin |
| A2 | Solid epoxy resin (bisphenol A diglycidyl ether-based), Olin |
| G | Tert-Butylphenyl-glycidylether, Polypox R7, epoxy-bearing reactive diluent |
| B | Dicyandiamide, Dyhard 100SF, AlzChem |
| C | N,N-dimethylurea, Mw: 88.11 g/mol, Sigma Aldrich |
| F1 | Calcium carbonate |
| F2 | Pyrogenic silica |
| F3 | Calcium oxide |
| Pigment | Carbon black |
| CPP | Corrosion protection particles (aluminum phosphate) |
| PAE1 | Eggshell powder, particle size D₅₀ = 13 µm, YASPIS (Switzerland) |
| PAS1 | Oyster shell powder, ground with a ball mill and then sieved, particle size D₅₀ = 95 µm, Insectosphere (France) |
| PAS2 | Oyster shell powder, ground with a ball mill and then sieved, particle size D₅₀ approximately 175 µm, Ovive SE (France) |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= "*IPDI"*), Evonik |

| | |
|---|---|
| Raw materials used. | |

### Production of the compositions

The reference composition Ref.1 and the inventive compositions E1 to E3 were produced according to the compositions in table 1, wherein the stated amounts are in parts by weight.

### Test methods:

### Tensile strength (TS), elongation at break (EB) and modulus of elasticity (E-modulus) (DIN EN ISO 527)

An adhesive sample was pressed between two Teflon papers to a layer thickness of 2 mm. After curing at 180°C for 30 min, the Teflon papers were removed, and the specimens were die-cut to the DIN standard state. The test specimens were examined under standard climatic conditions at a strain rate of 2 mm/min. Tensile strength, elongation at break and the 0.05-0.25% modulus of elasticity were measured to DIN EN ISO 527 at a temperature of 23°C.

### Lap shear strength oven curing for 40 min/180°C (LSS) (DIN EN 1465)

Cleaned test specimens of HDG H420 steel (thickness 1.2 mm) that had been reoiled with Anticorit PL 3802-39S were bonded with the adhesive over a bonding area of 25 x 10 mm with glass beads as spacer in a layer thickness of 0.3 mm, and cured at oven temperature 180°C for 40 min.

Lap shear strength was determined on a tensile tester at a strain rate of 10 mm/min in a triple determination to DIN EN 1465 at a temperature of 23°C ("LSS @ RT").

### Lap shear strength after aging (LSS aging) (DIN EN 1465)

Cleaned test specimens of HDG H420 steel (thickness 1.2 mm) that had been reoiled with Anticorit PL 3802-39S were bonded with the adhesive over a bonding area of 25 x 10 mm with glass beads as spacer in a layer thickness of 0.3 mm.

Thereafter, the samples are stored for 30 days at 35°C and 80% humidity in joined state prior to curing at oven temperature 180°C for 40 min.

Lap shear strength was determined using a tensile tester at a strain rate of 10 mm/min in a triple determination to DIN EN 1465 at a temperature of 23°C ("LSS VDA).

### Impact peel strength (IP @ 23°C/-30 °C) (ISO 11343)

The specimens were produced with the adhesive and DC04+ZE steel with dimensions of 90 x 20 x 0.8 mm. The bonding area here was 20 x 30 mm at a layer thickness of 0.3 mm with glass beads as spacer. The samples were cured for 40 minutes at oven temperature 180°C. Impact peel strength was measured at 23°C, or at -30°C, as a triple determination on a Zwick 450 impact pendulum. The impact peel strength reported is the average force in N/mm under the measurement curve from 25% to 90% to ISO11343.

### Viscosity (Viscosity 25°C)

Viscosity measurements of the adhesives were effected 1 d after production on an Anton Paar MCR 101 rheometer by oscillation using a plate-plate geometry at a temperature of 25°C with the following parameters: 5 Hz, measurement gap 1 mm, plate-plate diameter 25 mm, 1% deformation.

### Viscosity/storage stability of compositions (Viscosity 25°C after 7d/60°C and Increase)

For assessment of the storage stability of the adhesives, the viscosity measurement @ 25°C was repeated after storage at the specified temperature for 7 days at 60°C ("Viscosity 25°C after 7d/60°C") and the percentage rise in viscosity that results after the storage compared to the value without storage ("Viscosity 25°C") was ascertained ("Increase").

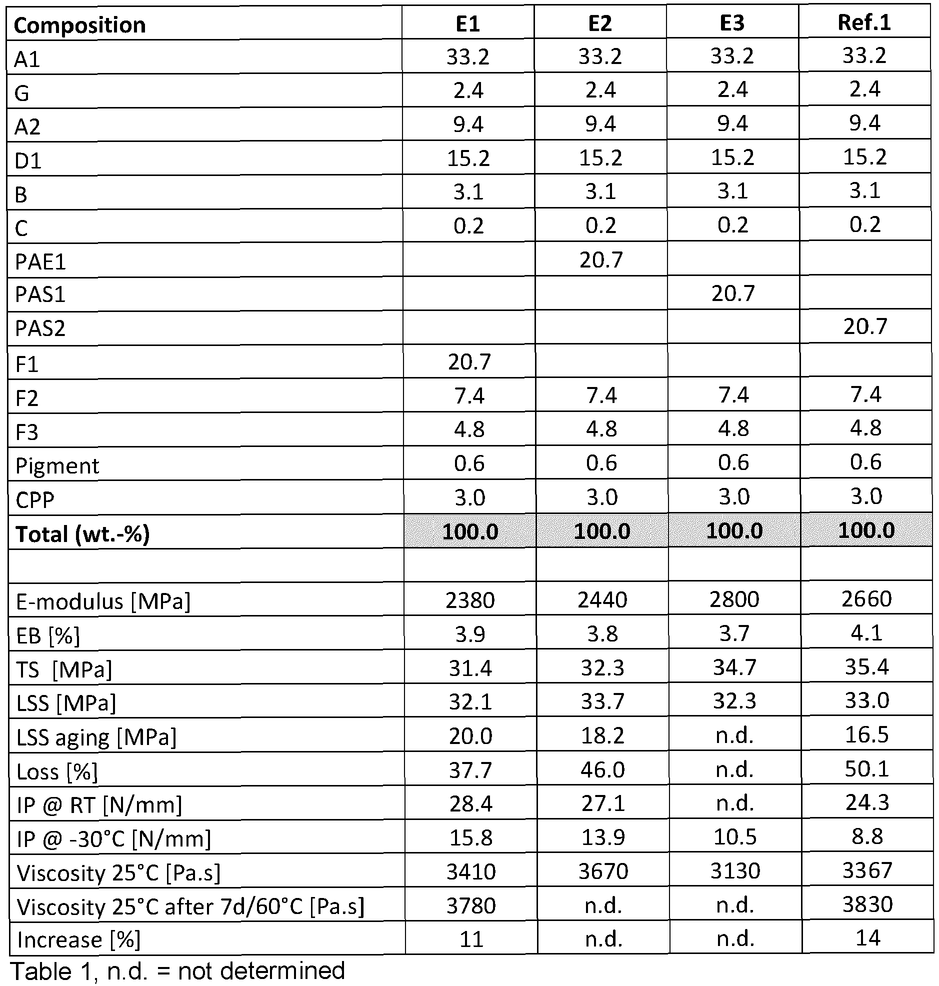

## Claims

1. The use of particles **PA** selected from the group consisting of eggshell particles **PAE** and seashell particles **PAS,** to improve the lap shear strength of a thermosetting one-component epoxy resin composition after exposure in the uncured state for 30 days at 35 °C, 80 % humidity, wherein the lap shear strength is measured as described in the experimental section, wherein the improvement of the lap shear strength is compared to said thermosetting one-component epoxy resin compositions not having said particles **PA** and wherein the thermosetting one-component epoxy resin composition comprises:
a) at least one epoxy resin **A** having an average of more than one epoxy group per molecule, preferably 10 - 60 % by weight, more preferably 30 - 60 % by weight, most preferably 40 - 45 % by weight % by weight, based on the total weight of the thermosetting one-component epoxy resin composition;
b) at least one latent curing agent **B** for epoxy resins, preferably the latent curing agent **B** is selected from dicyandiamide, dihydrazides, guanamines, guanidines, anhydrides of polybasic carboxylic acids and aminoguanidines, preference being given to dicyandiamide; and
c) at least one toughness improver **D**, preferably at least one terminally blocked polyurethane polymer **D1;**
preferably, the improvement of lap shear strength is more than 10 %, more preferably more than 20 %, compared to the thermosetting one-component epoxy resin compositions not containing particles **PA.**

2. The use according to claim 1, wherein the thermosetting one-component epoxy resin composition has a lap shear strength after exposure in the uncured state for 30 days at 35 °C, 80 % humidity, measured as described in the experimental section, of > 17.5 MPa, especially ≥ 18 MPa, especially ≥ 19 MPa.

3. The use of particles **PA** selected from the group consisting of eggshell particles **PAE** and seashell particles **PAS,** to improve the impact peel strength, preferably at 23 °C and/or at -30 °C, more preferably at -30 °C, of a thermosetting one-component epoxy resin composition, wherein the impact peel strength is measured as described in the experimental section, wherein the improvement of the impact peel strength is compared to said thermosetting one-component epoxy resin compositions not having said particles **PA** and wherein the thermosetting one-component epoxy resin composition comprises:
a) at least one epoxy resin **A** having an average of more than one epoxy group per molecule, preferably 10 - 60 % by weight, more preferably 30 - 60 % by weight, most preferably 40 - 45 % by weight % by weight, based on the total weight of the thermosetting one-component epoxy resin composition;
b) at least one latent curing agent **B** for epoxy resins, preferably the latent curing agent **B** is selected from dicyandiamide, dihydrazides, guanamines, guanidines, anhydrides of polybasic carboxylic acids and aminoguanidines, preference being given to dicyandiamide; and
c) at least one toughness improver **D,** preferably at least one terminally blocked polyurethane polymer **D1;**
preferably, the improvement of impact peel strength is more than 10 %, more preferably more than 15 %, even more preferably more than 40 %, most preferably more than 60 %, compared to the thermosetting one-component epoxy resin compositions not containing particles **PA.**

4. The use according to claim 3, wherein the thermosetting one-component epoxy resin composition has an impact peel strength at 23 °C, measured as described in the experimental section, of ≥ 25 N/mm, especially ≥ 27 N/mm, more preferably ≥ 28 N/mm.

5. The use according to claim 3 or claim 4, wherein the thermosetting one-component epoxy resin composition has an impact peel strength at -30 °C, measured as described in the experimental section, of ≥ 10 N/mm, especially ≥ 13 N/mm, more preferably ≥ 15 N/mm.

6. The use of particles **PA** selected from the group consisting of eggshell particles **PAE** and seashell particles **PAS,** to reduce the viscosity increase after storage for 7 days at 60 °C of a thermosetting one-component epoxy resin composition, wherein the viscosity increase is measured as described in the experimental section, wherein the reduction of the viscosity increase is compared to said thermosetting one-component epoxy resin compositions not having said particles **PA** and wherein the thermosetting one-component epoxy resin composition comprises:
a) at least one epoxy resin **A** having an average of more than one epoxy group per molecule, preferably 10 - 60 % by weight, more preferably 30 - 60 % by weight, most preferably 40 - 45 % by weight % by weight, based on the total weight of the thermosetting one-component epoxy resin composition;
b) at least one latent curing agent **B** for epoxy resins, preferably the latent curing agent **B** is selected from dicyandiamide, dihydrazides, guanamines, guanidines, anhydrides of polybasic carboxylic acids and aminoguanidines, preference being given to dicyandiamide; and
c) at least one toughness improver **D**, preferably at least one terminally blocked polyurethane polymer **D1;**
preferably, the reduction in viscosity increase is less than 90 % of the viscosity increase, more preferably less than 80 % of the viscosity increase of the thermosetting one-component epoxy resin compositions not containing particles **PA.**

7. The use according to any of the proceeding claims, **characterized in that** the thermosetting one-component epoxy resin composition additionally includes at least one accelerator **C** for epoxy resins selected from the list consisting of substituted ureas, imidazoles, imidazolines and blocked amines, preferably substituted ureas, more preferably aliphatic substituted ureas, preferably the fraction of the accelerator **C** for epoxy resins is from 0.01 - 2 wt.-%, preferably 0.1 - 1 wt.-%, more preferably 0.15 - 0.5 wt.-%, based on the total weight of the thermosetting epoxy resin composition.

8. The use according to any of the proceeding claims, **characterized in that** the proportion of toughness improver **D**, especially of terminally blocked polyurethane polymer **D1,** is 10-45% by weight, especially 15-35% by weight, based on the total weight of the thermosetting one-component epoxy resin composition.

9. The use according to any of the proceeding claims, **characterized in that** the thermosetting one-component epoxy resin composition additionally includes 5-30% by weight, preferably 7.5-20% by weight, more preferably 10-15% by weight, based on the total weight of the thermosetting one-component epoxy resin composition, of at least one filler **F,** preferably selected from the group consisting of calcium carbonate, calcium oxide and fumed silicas.

10. The use according to any of the proceeding claims, **characterized in that** the thermosetting one-component epoxy resin composition has a viscosity at 25°C of 1000-5500 Pa*s, especially 1500-5000 Pa*s, preferably 2000-4500 Pa*s, more preferably 2000-4000 Pa*s, especially measured with a rheometer in oscillation using a plate-plate geometry with the following parameters: 5 Hz, measurement gap 1 mm, plate-plate diameter 25 mm, 1% deformation.

11. The use according to any of the proceeding claims, **characterized in that** the particles **PA** have a particle size D₅₀ between 5 - 200 µm, preferably between 7.5 - 150 µm, more preferably between 10 - 100 µm, determined by laser diffractometry, more preferably by using a Sympatec HELOS BR machine and wet dispersion analysis in isopropanole (QUIXEL).

12. The use according to any of the proceeding claims, **characterized in that** the particles **PA** are eggshell particles **PAE.**

13. The use according to any of the proceeding claims, **characterized in that** proportion of the particles **PA** is 5-40% by weight, more preferably 10-30% by weight, most preferably 15-25% by weight, based on the total weight of the thermosetting one-component epoxy resin composition.
